# EUROPEAN PATENT APPLICATION

(11) **EP 1 555 512 A1**
(43) Date of publication of application: **20.07.2005**
(21) Application number: 05000706.1
(22) Date of filing: 14.01.2005
(51) Int. Cl.: G01C 21/36

(54) **Navigation apparatus**

(30) Priority: 15.01.2004 JP 2004008126
(71) Applicant: Alpine Electronics, Inc., Tokyo (JP)
(72) Inventor: Sasajima, Akihiko, Shinagawa-ku Tokyo (JP)
(74) Representative: Klunker . Schmitt-Nilson . Hirsch

(57) **Abstract**

A navigation apparatus includes a map display unit for displaying a map image of a region including a vehicle position of a vehicle, the map image including a vehicle-position image indicating the vehicle position, and a display changing unit for changing a display mode of the vehicle-position image when the vehicle-position image indicating the vehicle position is moved along a road, at a point where attention is to be paid while the vehicle is traveling. The map display unit includes a detailed-map drawing unit, a simple-map drawing unit, a display processor, and a display. The display changing unit includes a road-condition determining unit and a vehicle-position-image drawing unit.

## Description

### BACKGROUND OF THE INVENTION

### 1. Field of the Invention

The present invention relates to a navigation apparatus for displaying map information of a region including a vehicle position.

### 2. Description of the Related Art

Navigation apparatuses in which map information of a region including a vehicle position is displayed in a simplified manner have been known, as described, for example, in Japanese Unexamined Patent Application Publication No. 63-271109, pages 2 to 4 and Figs. 1 to 6.

In a navigation apparatus disclosed in Japanese Unexamined Patent Application Publication No. 63-271109, since map information is displayed in a simplified manner, it is difficult to grasp road condition that could be determined based on road shape. For example, when detailed map information including detained road shape is displayed, a driver is allowed to know an approximate radius of curvature of a curve based on road shape, so that the driver is allowed to prepare for the curve, for example, by slowing down, before entering the curve.

Also, in some cases, it is difficult to grasp road condition even when detailed map information is displayed. For example, even when road shape is displayed accurately, it is not allowed to know that a road ahead is a steep slope before entering the road.

### SUMMARY OF THE INVENTION

The present invention has been made in view of the situation described above, and an object thereof is to provide a navigation apparatus that allows road situation to be readily grasped.

In order to achieve the object, the present invention provides a navigation apparatus including a map display unit for displaying a map image of a region including a vehicle position of a vehicle, the map image including a vehicle-position image indicating the vehicle position; and a display changing unit for changing a display mode of the vehicle-position image when the vehicle-position image indicating the vehicle position is moved along a road, at a point where attention is to be paid while the vehicle is traveling. By changing the display mode of the vehicle-position image in accordance with road situation that does not appear in the map image, it is allowed to readily grasp the road situation.

Preferably, the navigation apparatus further includes an audio-guidance outputting unit for outputting audio guidance in synchronization with change in the display mode of the vehicle-position image. By outputting audio guidance at the same time with changing the display mode of the vehicle-position image, a user is allowed to grasp road situation without missing.

Preferably, the map display unit includes a simple-map drawing unit for generating a simple map image in which road shape is simplified, and the display changing unit changes the display mode of the vehicle-position image included in the simple map image. Particularly when a simple map image is displayed, it is not allowed to grasp road situation that could be determined based on road shape. By changing the display mode of the vehicle position image, such road situation can also be grasped.

Preferably, the navigation apparatus further includes a vehicle-position detecting unit for detecting a traveling position of the vehicle, the vehicle position is a traveling position of the vehicle detected by the vehicle-position detecting unit, and the point where attention is to be paid is a point that precedes a point of a special road condition by a predetermined distance along a traveling route. This allows the special road condition to be noticed in advance by watching the vehicle-position mage with the display mode changed on the map image, before entering the point of the special road condition while traveling. Thus, it is allowed to prepare for traveling through the point of the special road condition.

Preferably, the navigation apparatus further includes a route searching unit for searching for a route to be traveled along to a destination; and a vehicle-position moving unit for moving the vehicle-position image indicating the vehicle position along the traveling route found by the route searching unit; and the point where attention is to be paid is a point of a special road condition. This allows a special road condition of a road ahead to be grasped in advance by observing the manner of change in the display mode of the vehicle-position image during demonstration traveling in which the vehicle-position image is moved along a traveling route found by route searching. Thus, it is allowed to prepare for traveling through the point of the special road condition.

Preferably, the special road condition is a sharp curve with a radius less than or equal to a predetermined value. This allows the road condition to be noticed before entering the sharp curve. Thus, it is allowed to sufficiently slow down before entering the curve.

Preferably, the special road condition is a steep slope with a gradient greater than or equal to a predetermined value. This allows the road condition to be noticed before entering the steep slope. Thus, it is allowed to sufficiently slow down before entering the steep slope.

Preferably, the special road condition is a road-surface condition that requires slowing down. This allows the road condition to be noticed before entering the point of the road-surface condition. Thus, it is allowed to sufficiently slow down before entering the point.

Preferably, the display changing unit changes the display mode by causing the vehicle-position image to vibrate, by changing a color of the vehicle-position image, by causing the vehicle-position image to blink, or by attaching an auxiliary image to the vehicle-position image. By changing the display mode in the manner described above, a user is allowed to grasp the manner of change readily and accurately, so that effective caution is given to the user.

### BRIEF DESCRIPTION OF THE DRAWINGS

Fig. 1 is a diagram showing the construction of a navigation apparatus according to an embodiment of the present invention;
Fig. 2 is a flowchart showing the procedure of an operation for changing a display mode of a vehicle-position image in accordance with road condition when a simple map image is displayed;
Fig. 3 is a diagram showing a specific example of a simple map image including a navigation route; and
Fig. 4 is a diagram showing a specific example of changing the display mode of the vehicle-position image included in the simple map image during demonstration traveling.

### DESCRIPTION OF THE PREFERRED EMBODIMENTS

Now, an on-vehicle navigation apparatus according to an embodiment of the present invention will be described with reference to the drawings.

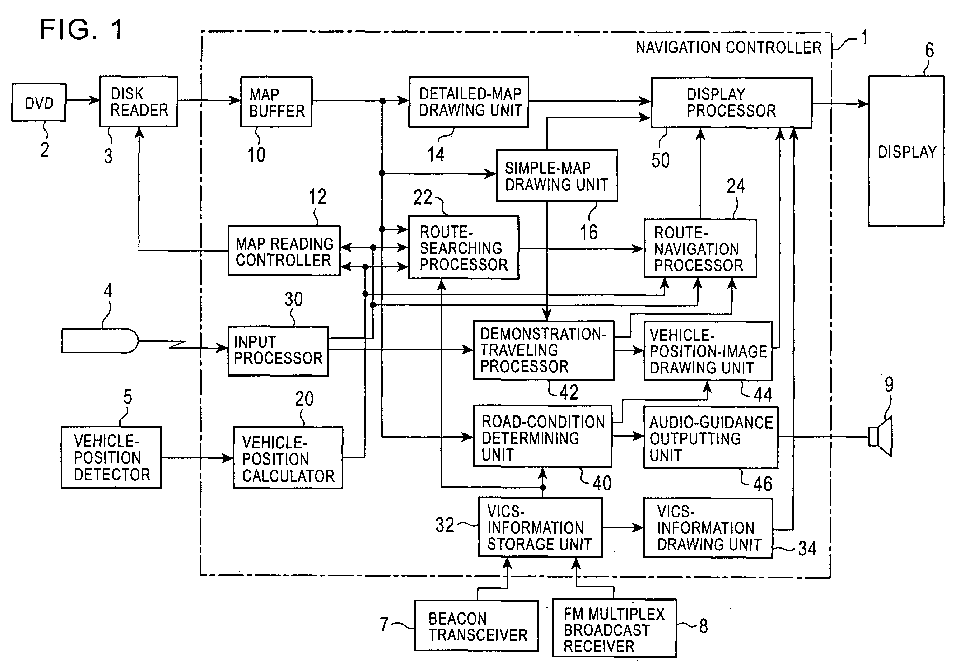

Fig. 1 is a diagram showing the construction of a navigation apparatus according to an embodiment of the present invention. Referring to Fig. 1, the navigation apparatus includes a navigation controller 1, DVDs 2, a disk reader 3, a remote control unit 4, a vehicle-position detector 5, a display 6, a beacon transceiver 7, an FM multiplex broadcast receiver 8, and a speaker 9.

The navigation controller 1 controls the overall operation of the navigation apparatus. The navigation controller 1 achieves its functions by executing predetermined operation programs using a CPU, a ROM, a RAM, and the like. Detailed construction of the navigation controller 1 will be described later.

The DVDs 2 are information recording media storing map data needed for displaying maps, searching for facilities, searching for routes, displaying guidance regarding highways, and so forth. The DVDs 2 store map data in the form of rectangular pages of a suitable size defined by longitude and latitude. Each of the pages of the map data can be identified and read by specifying a page number. Furthermore, the map data includes information regarding road conditions of roads included in the pages, such as curvature radius or slope gradient, which is hereinafter referred to as road-condition information.

The disk reader 3 allows one or more DVDs 2 to be loaded thereon. The disk reader 3 reads map data from one of the DVDs 2 under the control of the navigation controller 1. The disks loaded need not necessarily be DVDs, and may be CDs. Furthermore, the disk reader 3 may allow both DVDs and CDs to be loaded as selected by a user. Alternatively, instead of exchangeable disk recording media such as DVDs or CDs, a storage device having a large capacity, such as a hard disk, may be used.

The remote control unit 4 has a joystick for specifying directions such as upward, downward, leftward, and rightward directions, and various operation keys including numeric keys for entering numbers and "Enter" key for entering various setting or the like. The remote control unit 4 outputs signals in accordance with operations to the navigation controller 1.

The vehicle-position detector 5 includes, for example, a GPS receiver, a direction sensor, and a distance sensor. The vehicle-position detector 5 detects the position (longitude and latitude) of the vehicle position at specific timing, and outputs a result of detection.

The display 6 displays various images such as a map image of a region including the vehicle position or a result of searching for facilities in the region, based on drawing data output from the navigation controller 1.

The beacon transceiver 7 carries out bilateral communications by way of radio waves with radio wave beacons provided mainly on highways, and also carries out bilateral communications with optical beacon transceivers provided mainly on ordinary roads, thereby receiving traffic information transmitted from a road traffic information center. The FM multiplex broadcast receiver 8 receives traffic information included in multiplexed data superposed on ordinary FM broadcasting. The traffic information received by the beacon transceiver 7 and the FM multiplex broadcast receiver 8 includes traffic-jam information indicating a degree of traffic jam in a specific segment of a road, traveling time indicating time needed for traveling a specific segment, event information indicating an accident, an icy road, or the like, road-condition information indicating a closed road, opposed traffic, or the like, and so forth.

Next, detailed construction of the navigation controller 1 will be described. The navigation controller 1 shown in Fig. 1 includes a map buffer 10, a map reading controller 12, a detailed-map drawing unit 14, a simple-map drawing unit 16, a vehicle-position calculator 22, a route-searching processor 22, a route-navigation processor 24, an input processor 30, a VICS-information storage unit 32, a VICS-information drawing unit 34, a road-condition determining unit 40, a demonstration-traveling processor 42, a vehicle-position-image drawing unit 44, an audio-guidance outputting unit 46, and a display processor 50.

The map buffer 10 temporarily stores map data read from one of the DVDs 2 by the disk reader 3. The map reading controller 12 outputs a request for reading map data of a specified range to the disk reader 3 based on a vehicle position calculated by the vehicle-position calculator 20 and instructions from the input processor 30. The detailed-map drawing unit 14 executes a drawing process based on the map data stored in the map buffer 10 to generate detailed-map-image drawing data needed for displaying a detailed map image reflecting accurate road shape. The simple-map drawing unit 16 executes a drawing process based on the map data stored in the map buffer 10 to create simple-map-image drawing data needed for displaying a simple map image including feature points that serve as references for traveling, such as intersections.

The vehicle-position calculator 20 calculates the vehicle position based on detection data output from the vehicle-position detector 5. When the vehicle position does not fall on a road in the map data, the vehicle-position calculator 20 executes a map matching process for correcting the calculated vehicle position.

The route-searching processor 22 searches for a traveling route (navigation route) that connects a starting point and a destination point (or an intermediate point) in accordance with specified search conditions. The route-navigation processor 24 generates navigation-route drawing data for displaying the navigation route found by the route-searching processor 22 as overlapped on a map.

The input processor 30 outputs instructions for executing operations corresponding to various operation commands input from the remote control unit 4 to relevant parts of the navigation controller 1. The VICS-information storage unit 32 stores VICS information transmitted from a road traffic information center (VICS center) and received by the beacon transceiver 7 or the FM multiplex broadcast receiver 8. The VICS-information drawing unit 34 selects information relevant to the range of a map image to be drawn from the VICS information stored in the VICS-information storage unit 32, and generates drawing data for displaying predetermined symbols corresponding to items included in the information.

The road-condition determining unit 40 determines whether a point where attention is to be paid while traveling exists on a road to be traveled along. A point where attention is to be paid refers to a point of a special road condition, such as a sharp curve with a radius less than or equal to a predetermined value, a steep slope with a gradient greater than or equal to a predetermined value, or a road-surface condition that requires slowing down (an icy road, a road under work, a submerged road, or the like). This is determined based on the map data stored in the map buffer 10, or based on the VICS information stored in the VICS-information storage unit 32.

The demonstration traveling processor 42 executes demonstration traveling, i.e., moves the vehicle position indicated on a simple map image along a navigation route found by the route-searching processor 22 and superposed on the simple map image.

The vehicle-position-image drawing unit 44 generates vehicle-position-image drawing data for displaying an image having a predetermined shape at a position corresponding to the vehicle position on a map. In this embodiment, the display mode of the vehicle-position image is changed according to the road condition determined by the road-condition determining unit 40, and the vehicle-position-image drawing unit 44 generates vehicle-position-image drawing data in accordance with the changed display mode. The display mode is changed, for example, by causing the vehicle-position image to vibrate, changing the color of the vehicle-position image, causing the vehicle-position image to blink, or attaching an auxiliary image indicating the type of a special road condition.

The audio-guidance outputting unit 46, when it is determined by the road-condition determining unit 40 that the road of interest is of a special road condition, generates audio guidance indicating the type of the special road condition and outputs the audio guidance via the speaker 9.

The display processor 50 receives input of detailed-map-image drawing data generated by the detailed-map drawing unit 14 or simple-map-image drawing data generated by the simple-map drawing unit 16, and displays a map image of a specified range based on the drawing data on a screen of the display 6. Furthermore, when drawing data generated by the VICS-information drawing unit 34 is input, the display processor 50 displays an image corresponding to the drawing data as overlapped on the map image on the screen of the display 6. Furthermore, when vehicle-position-image drawing data generated by the vehicle-position-image drawing unit 44 is input, the display processor 50 displays a vehicle-position image corresponding to the vehicle position based on the drawing data as overlapped on the map image.

The detailed-map drawing unit 14, the simple-map drawing unit 16, the display processor 50, and the display 6 correspond to the map display unit, the road-condition determining unit 40 and the vehicle-position-image drawing unit 44 correspond to the display changing unit, the simple-map drawing unit 16 corresponds to the simple-map drawing unit, the vehicle-position detector 5 and the vehicle-position calculator 20 correspond to the vehicle-position detecting unit, the route-searching processor corresponds to the route searching unit, the demonstration-traveling processor 42 corresponds to the vehicle-position moving unit, and the audio-guidance outputting unit 46 and the speaker 9 correspond to the audio-guidance outputting unit.

The navigation apparatus according to this embodiment is constructed as described above. Next, an operation for changing display mode of the vehicle-position image in accordance with road condition will be described.

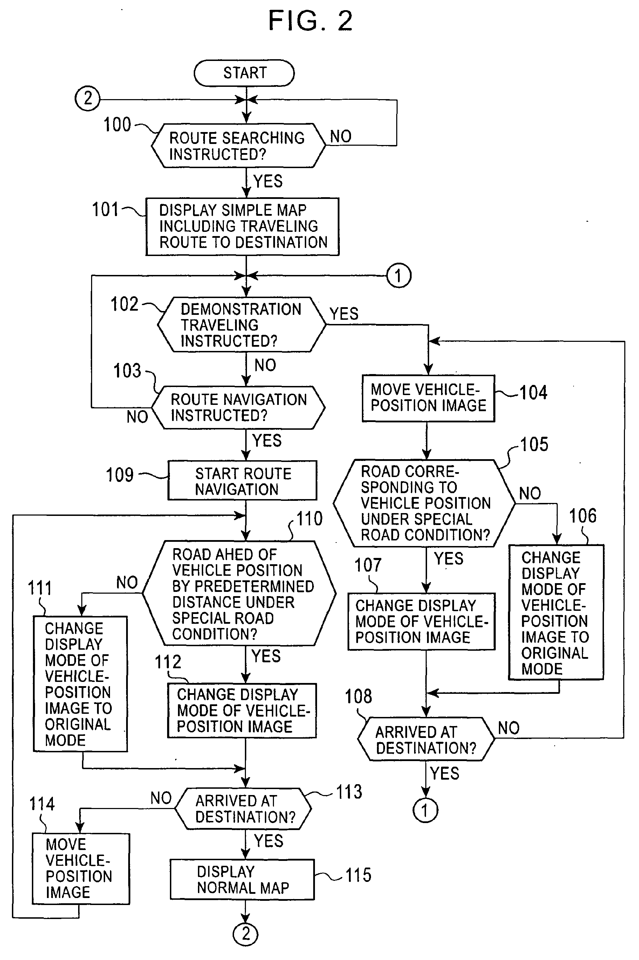

Fig. 2 is a flowchart showing the procedure of an operation for changing the display mode of the vehicle-position image in accordance with road condition when a simple map image is displayed. Although the navigation apparatus according to this embodiment may display a detailed map by the detailed-map drawing unit 14, in the following description, it is assumed that navigation operations are performed using a simple map image.

When the navigation apparatus starts operation, the route-searching processor 22 determines whether route searching has been instructed (step 100). Step 100 repeatedly turns out negative until route searching is instructed. When a user operates the remote control unit 4 to instruct route searching, step 100 turns out positive. Then, the route-searching processor 22 searches for a route to be traveled along to a specified destination. The simple-map drawing unit 16 generates simple-map-image drawing data so that the entire traveling route found by route searching (i.e., a navigation route) is included therein. The route-navigation processor 24 generates drawing data of the navigation route to be superposed on the simple map image. The display processor 50 displays a simple map image including the navigation route on the display 6 using the above sets of drawing data (step 101).

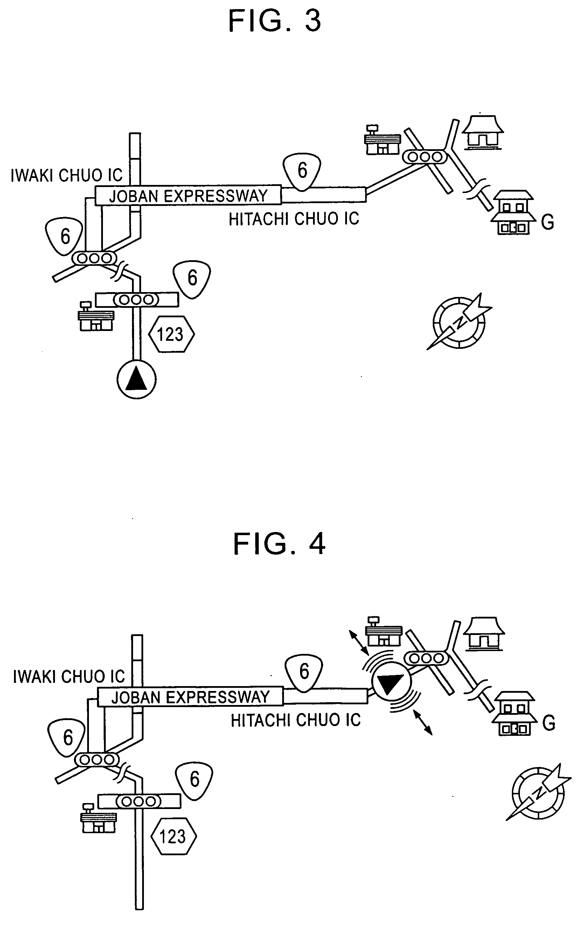

Fig. 3 is a diagram showing a specific example of a simple map image including a navigation route to a destination G. The simple map image includes only landmarks associated with intersections, such as convenience stores, and the navigation route is drawn based on straight lines of widths and colors in accordance with road types. The navigation route does not reflect actual road shape, and straight roads that do not require guidance could be omitted.

The demonstration-traveling processor 42 determines whether demonstration traveling for moving the vehicle-position image along the navigation route has been instructed (step 102). When demonstration traveling has not been instructed, step 102 turns out negative. Then, the route-navigation processor 24 determines whether a route-navigation operation has been instructed (step 103). When a route-navigation operation has not been instructed, step 103 turns out negative. The procedure then returns to step 102, and it is repeatedly determined whether demonstration traveling has been instructed.

When the user operates the remote control unit 4 to instruct demonstration traveling, step 102 turns out positive. Then, the demonstration-traveling processor 42 sends to the vehicle-position-image drawing unit 44 an instruction that the position of the vehicle-position image included in the simple map image be moved by a predetermined distance along the navigation route found by route searching. The vehicle-position-image drawing unit 44 makes setting so that the drawing position of the vehicle-position image is moved by the predetermined distance. The display processor 50 moves the drawing position of the vehicle-position image so that the vehicle-position image overlaps the simple map image, whereby the vehicle-position image is moved over the simple map image (step 104).

Then, the road-condition determining unit 40 determines whether a road corresponding to the vehicle position is of a special road condition (step 105). When the road is not of a special condition, such as a sharp curve or a steep slope, step 105 turns out negative. Then, the vehicle-position-image drawing unit 44 restores the display mode of the vehicle-position image to the original mode (step 106). When the display mode of the vehicle-position image has not been changed previously, the display mode need not be restored to the original mode. Thus, the operation is skipped, and the original display mode is maintained.

When the road corresponding to the vehicle position is of a special road condition, such as a sharp curve, step 105 turns out positive. Then, the vehicle-position-image drawing unit 44 changes the display mode of the vehicle-position image (step 107).

Fig. 4 is a diagram showing a specific example of changing the display mode of the vehicle-position image included in the simple map image during demonstration traveling. Fig. 4 shows an example where the vehicle is entering the navigation route drawn as a straight line in the simple map image, which is actually a sequence of sharp curves. For example, the vehicle-position image is caused to vibrate perpendicularly with respect to the navigation route.

After changing the display mode of the vehicle-position image or restoring it to the original mode, the route-navigation processor 24 determines whether the position of the vehicle-position image moved according to an instruction by the demonstration-traveling processor 42 has reached a destination (step 108). If the position of the vehicle-position image has not reached the destination, step 108 turns out negative. Then, the procedure returns to step 104, and the operation of moving the vehicle-position image is repeated. When the position of the vehicle-position image has reached the destination, step 108 turns out positive. Then, the procedure returns to step 102, and it is repeatedly determined whether an instruction for demonstration traveling has been issued.

When a route-navigation operation is instructed after a simple map image including a navigation route is displayed, step 103 turns out positive. Then, the route-navigation processor 24 starts a route-navigation operation (step 109). For example, similarly to demonstration traveling, the route-navigation operation is executed by moving the vehicle position calculated by the vehicle-position calculator 20 in the route-navigation operation along the navigation route.

Then, the road-condition determining unit 40 determines whether a road ahead of the vehicle position by a predetermined distance is of a special road condition (step 110). When the road is not of a special road condition, such as a sharp curve or a steep slope, step 110 turns out negative. Then, the vehicle-position-image drawing unit 44 changes the display mode of the vehicle-position image to the original mode (step 111). Similarly to the operation in step 106 for demonstration traveling, when the display mode of the vehicle-position image has not been changed previously, the display mode need not be restored to the original mode. Thus, the operation is skipped, and the original display mode is maintained.

When the road ahead of the vehicle position by the predetermined distance is of a special road condition, such as a sharp curve, step 110 turns out positive. Then, the vehicle-position-image drawing unit 44 changes the display mode of the vehicle-position image (step 112).

After changing the display mode of the vehicle-position image or restoring it to the original mode, the route-navigation processor 24 determines whether the current vehicle position has reached the destination (step 113). When the current vehicle position has not reached the destination, step 113 turns out negative. Then, the vehicle-position-image drawing unit 44 moves the display position of the vehicle-position image in accordance with the vehicle position calculated by the vehicle-position calculator 20 (step 114). Then, the procedure returns to step 110, and the operation of determining road condition is repeated. When the vehicle position has reached the destination, an ordinary simple map image not including a navigation route is displayed (step 115). Then, the procedure returns to step 100, and it is repeatedly determined whether route searching has been instructed.

As described above, in the navigation apparatus according to this embodiment, when a simple map image is displayed, the display mode of a vehicle-position image is changed in accordance with road situation that does not appear in the map image. This facilitates understanding of the road situation. Particularly when a simple map image is displayed, it is not allowed to grasp road situation that could be understood based on road shape. By changing the display mode of the vehicle-position image, such road situation can also be grasped.

Furthermore, by watching the vehicle-position image with the display mode changed before entering a road of a special road condition while traveling along a navigation route displayed on a simple map image, it is allowed to know the road condition in advance. Thus, it is allowed to prepare for traveling along the road of the special road condition.

Furthermore, by observing the manner of change in the display mode of the vehicle-position image during demonstration traveling for moving the vehicle-position image in advance along a traveling route found by route searching, it is allowed to grasp in advance a special road condition of a road to be traveled along. Thus, it is allowed to prepare for traveling through the point of the special condition.

Furthermore, by detecting a sharp curve with a radius less than or equal to a predetermined value as a special road condition, it is allowed to know the road condition before entering the curve, so that it is allowed to sufficiently slow down before entering the curve. Alternatively or in addition, by detecting a steep slope with a gradient greater than or equal to a predetermined value as a special road condition, it is allowed to know the road condition in advance, so that it is allowed to sufficiently slow down before entering the slope. Furthermore, by detecting a road-surface condition that requires slowing down as a special road condition, it is allowed to know the road condition in advance, so that it is allowed to sufficiently slow down before entering the road.

Furthermore, by changing display mode, for example, by causing the vehicle-position image to vibrate, changing the color of the vehicle position image, causing the vehicle-position image to blink, or attaching an auxiliary image indicating the type of a special road condition, a user is allowed to readily and reliably grasp the manner of change, so that effective caution is given to the user.

The present invention is not limited to the embodiment described above, and various modifications can be made without departing from the spirit of the present invention. For example, although the display mode of the vehicle-position image is changed in accordance with road condition when a simple map image is displayed in the embodiment described above, the display mode of the vehicle-position image may be similarly changed in accordance with road condition when a detailed map image is displayed.

Furthermore, although map data for displaying maps is stored in a DVD, CD, a hard disk, or the like in the embodiment described above, map data for displaying maps may be obtained on an as-needed basis by a communication device communicating with a map distribution server. Particularly, when a simple map image is displayed, when a simple map image is displayed, the amount of data needed is reduced, so that the time needed for obtaining data is short.

Furthermore, although the display mode of the vehicle-position image is changed in the embodiment described above by causing the vehicle-position image to vibrate, changing the color of the vehicle-position image, causing the vehicle-position image to blink, or attaching an auxiliary image indicating the type of a special road condition, other ways of changing the display mode may be used. For example, the vehicle-position image may be rotated, slanted, or repeatedly enlarged and reduced. Alternatively, the method of changing the display mode may be switched based on the type of special road condition. This allows the type of special road condition to be grasped by observing the manner of change.

Furthermore, although the display mode of the vehicle-position image is changed when a simple map image including a navigation route is displayed in the embodiment described above, the display mode of the vehicle-position image may be changed in accordance with a special road condition when an ordinary simple map image not including a navigation route or a detailed map image is displayed.

Furthermore, although the display mode of the vehicle-position image is changed in accordance with a special road condition in the embodiment described above, at the same time, the audio-guidance outputting unit 46 may output audio guidance indicating the type of the special road condition or the occurrence of the special road condition. This allows a user to grasp the road condition reliably without missing.

## Claims

1. A navigation apparatus comprising:
map display means for displaying a map image of a region including a vehicle position of a vehicle, the map image including a vehicle-position image indicating the vehicle position; and
display changing means for changing a display mode of the vehicle-position image when the vehicle-position image indicating the vehicle position is moved along a road, at a point where attention is to be paid while the vehicle is traveling.

2. The navigation apparatus according to Claim 1, further comprising audio-guidance outputting means for outputting audio guidance in synchronization with change in the display mode of the vehicle-position image.

3. The navigation apparatus according to Claim 1 or 2, wherein the map display means comprises simple-map drawing means for generating a simple map image in which road shape is simplified, and the display changing means changes the display mode of the vehicle-position image included in the simple map image.

4. The navigation apparatus according to one of Claims 1 to 3, further comprising vehicle-position detecting means for detecting a traveling position of the vehicle, wherein the vehicle position is a traveling position of the vehicle detected by the vehicle-position detecting means, and the point where attention is to be paid is a point that precedes a point of a special road condition by a predetermined distance along a traveling route.

5. The navigation apparatus according to one of Claims 1 to 4, further comprising:
route searching means for searching for a route to be traveled along to a destination; and
vehicle-position moving means for moving the vehicle-position image indicating the vehicle position along the traveling route found by the route searching means;
wherein the point where attention is to be paid is a point of a special road condition.

6. The navigation apparatus according to Claim 4 or 5, wherein the special road condition is a sharp curve with a radius less than or equal to a predetermined value.

7. The navigation apparatus according to Claim 4 or 5, wherein the special road condition is a steep slope with a gradient greater than or equal to a predetermined value.

8. The navigation apparatus according to Claim 4 or 5, wherein the special road condition is a road-surface condition that requires slowing down.

9. The navigation apparatus according to one of Claims 1 to 8, wherein the display changing means changes the display mode by causing the vehicle-position image to vibrate.

10. The navigation apparatus according to one of Claims 1 to 9, wherein the display changing means changes the display mode by changing a color of the vehicle-position image.

11. The navigation apparatus according to one of Claims 1 to 10, wherein the display changing means changes the display mode by causing the vehicle-position image to blink.

12. The navigation apparatus according to one of Claims 1 to 11, wherein the display changing means changes the display mode by attaching an auxiliary image to the vehicle-position image.
